# EUROPÄISCHE PATENTSCHRIFT

(11) **EP 2 157 963 B1**
(45) Veröffentlichungstag und Bekanntmachung des Hinweises auf die Patenterteilung: **13.03.2013**
(21) Anmeldenummer: 08715744.2
(22) Anmeldetag: 13.02.2008
(51) Int. Cl.: A61J 11/00, A61J 11/02, A61J 11/04

(54) **SAUGER**
PACIFIER
TÉTINE

(30) Priorität: 19.06.2007 DE 102007027960
(43) Veröffentlichungstag der Anmeldung: 03.03.2010
(73) Patentinhaber: MAPA GmbH, 27404 Zeven (DE)
(72) Erfinder: DU CHESNE, Alexander, 27404 Heeslingen (DE); MARR, Günter, 21244 Rosengarten (DE); TOMFORDE, Helmut, 21698 Brest (DE)
(74) Vertreter: Hauck Patent- und Rechtsanwälte
(86) Internationale Anmeldenummer: PCT/EP2008/001075
(87) Internationale Veröffentlichungsnummer: WO 2008/154968

(56) Entgegenhaltungen:
- EP-A- 1 652 506
- DE-A1- 2 355 545
- DE-A1- 3 530 911
- DE-U1-202004 005 564
- US-A- 2 672 870
- US-A- 4 632 263

## Beschreibung

Die Erfindung bezieht sich auf einen Sauger, insbesondere für Benutzung durch Babys oder Kleinkinder.

Sauger mit einem Nippelträger und einem vom Nippelträger vorstehenden, hohlen Saugernippel sind beispielsweise aus der DE 94 15 655 U1 bekannt. Bei einem Trinksauger ist der Nippelträger eine Tülle, die mit einem Öffnungsrand am Rand einer Öffnung einer Trinkflasche fixierbar ist. Der Saugernippel weist an einem Mundstück bzw. Nippelkopf ein Trinkloch und die Tülle in einem Abstand vom Öffnungsrand ein Belüftungsventil auf. Ein Beruhigungssauger kommt ohne Trinkloch und Belüftungsventil aus. Der Nippelträger ist ein Mundschild, der sich am Lippenbereich abstützt und hierdurch verhindert, daß der Beruhigungssauger vom Kind heruntergeschluckt wird. Ferner bekannt sind Beruhigungssauger mit einem Griff an der Außenseite des Mundschildes, beispielsweise einem Knauf oder einem schwenkbaren Haltering.

Langes Nuckeln am Daumen oder einem zu harten oder dicken Saugernippel kann zu Gebißfehlstellungen des Kindes führen. Es sind bereits Sauger bekannt, bei denen dieses Risiko durch einen sehr dünnen und besonders weichen Saugernippel stark gemindert ist.

Die DE 35 30 911 A1 beschreibt einen Trinksauger mit einem Saugernippel mit ovalem Querschnitt, der im Bereich des hohlen Nippelkopfes einen Querschnitt mit verringerter Wandstärke an den Längsseiten aufweist. In diesem Bereich hat der Trinksauger innen einen kleineren Krümmungsradius als außen. Die Bereiche verringerter Materialstärke verringern die Kraft zum flachen Zusammendrücken des Nippelkopfes bei auftretenden Spannungen im Material nur geringfügig.

Davon ausgehend liegt der Erfindung die Aufgabe zugrunde, einen Sauger zur Verfügung zu stellen, der das Risiko von Gebißfehlstellungen noch weiter herabsetzt.

Die Aufgabe wird durch einen Sauger mit den Merkmalen des Anspruches 1 gelöst. Vorteilhafte Ausgestaltungen des Saugers sind in den Unteransprüchen angegeben.

Der erfindungsgemäße Sauger hat einen Nippelträger und einen von dem Nippelträger vorstehenden, hohlen Saugernippel, der mindestens in einem Axialabschnitt im Querschnitt außen oval ist und bei dem der Saugernippel zwei einander gegenüberliegende Bereiche geringerer Wandstärke an den beiden Längsseiten auf der großen Achse des den Querschnitt des Saugernippels außen umschreibenden Ovals und im Querschnitt außen einen Krümmungsradius aufweist, dadurch gekennzeichnet, dass der Saugernippel in den Bereichen mit geringerer Wandstärke im Querschnitt innen eine Ecke aufweist.

Bei den herkömmlichen Saugern wäre zur weiteren Reduzierung des Risikos von Gebißfehlstellungen eine generelle Verringerung der Dicke des Saugernippels weniger geeignet, weil diese mit einer Reduzierung der beim Nuckeln wahrgenommenen Gesamtsaugerdeformation einherginge, so daß der Sauger dem natürlichen Saugbedürfnis der Kinder nicht mehr hinreichend Rechnung tragen würde. Der mögliche Einsatz eines weicheren bzw. eine geringere Wandstärke aufweisenden Materials würde die Produktsicherheit verringern.

Der erfindungsgemäße Sauger ist durch die Bereiche mit geringerer Wandstärke (nachfolgend auch "Verdünnungen" genannt) an den beiden Längsseiten deutlich flexibler und übt deshalb bei der Anwendung weniger Druck auf den Kiefer aus, ohne daß die wahrgenommene Gesamtsaugerdeformation wesentlich verändert wird. Infolgedessen wird dem natürlichen Saugbedürfnis der Kinder Rechnung getragen und aufgrund der weiter verringerten lokalen Druckbelastungen des Kiefers das Risiko von Gebißfehlstellungen noch weiter herabgesetzt. Auch erleichtern die Verdünnungen ein zeitweiliges Abknicken des Saugernippels (sog. "kinking"-Deformation), das bei herkömmlichen Saugern den Kiefer besonders stark belastet. Da die geringere Wandstärke auf Bereiche des Saugernippels beschränkt ist und die übrigen Bereiche des Saugernippels Bereiche mit größerer Wandstärke (nachfolgend auch "Verdickungen" genannt) sind, tritt grundsätzlich keine mechanische Schwächung des Saugernippels ein. Zwar ist zu erwarten, daß sich Materialerschöpfungen in den Bereichen mit geringerer Wandstärke früher als in den Bereichen mit größerer Wandstärke des Saugernippels zeigen. Diese führen jedoch zu leicht erkennbaren Längsspaltungen des Saugernippels, bevor Teile davon abreißen können. Aufgrund der besseren Erkennbarkeit von Materialerschöpfungen können defekte Sauger besser erkannt und ersetzt werden. Ferner können am Saugernippel entstandene Risse durch die Verdünnungen "gefangen" und gezielt in Verlaufrichtung der Verdünnungen umgelenkt werden, so daß es zu einer leicht erkennbaren Längsspaltung des Saugernippels kommt, bevor Teile abreißen.

Bei einem Trinksauger ist der Nippelträger als Tülle und bei einem Beruhigungssauger ist der Nippelträger als Mundschild ausgestaltet.

Der Saugernippel weist in im Querschnitt konvexen Bereichen mit geringerer Wandstärke im Querschnitt innen eine Ecke und im Querschnitt außen eine Krümmung oder eine Ecke mit einem größeren Öffnungswinkel als im Querschnitt innen auf.

Gemäß einer anderen Ausgestaltung weist der Saugernippel in Bereichen mit geringerer Wandstärke im Querschnitt innen und außen parallel verlaufende Konturen auf und weist daneben Bereiche mit größerer oder sich mit zunehmendem Abstand von den Bereichen mit geringerer Wandstärke vergrößernder Wandstärke auf.

Bevorzugt ist der Saugernippel in den Bereichen geringerer Wandstärke und wahlweise in angrenzenden Bereichen außen glatt, damit er dem Kind beim Nuckeln kein unangenehmes Gefühl vermittelt.

Bereiche mit größerer Wandstärke können auf verschiedene Weise erzeugt werden. In den Bereichen größerer Wandstärke kann der Saugernippel im Querschnitt innen und außen durch Krümmungen und/oder Ecken und/oder Geraden begrenzt sein, beispielsweise durch zwei parallele Linien, zwischen denen die Wandstärke größer ist als in den Bereichen geringerer Wandstärke. Gemäß weiteren Beispielen sind Bereiche größerer Wandstärke im Querschnitt durch zwei voneinander weg gerichtete Krümmungen oder Ecken begrenzt. Ferner ist es möglich, daß der Sauger in Bereichen größerer Wandstärke zusätzliche Verdickungen oder Vorsprünge aufweist.

Gemäß einer anderen Ausgestaltung hat der Saugernippel in Bereichen mit größerer Wandstärke im Querschnitt außen mindestens einen Vorsprung. Gemäß einer Ausgestaltung hat der Saugernippel in Bereichen mit größerer Wandstärke im Querschnitt innen mindestens einen Vorsprung. Bei dieser Ausgestaltung kann der Saugernippel im Querschnitt außen glatt sein. Trotz der mechanischen Verstärkung des Saugernippels wird dem Kind beim Nuckeln kein unangenehmes Gefühl vermittelt. Gemäß einer weiteren Ausgestaltung hat der Saugernippel an einander gegenüberliegenden Seiten im Querschnitt innen zueinander versetzte Vorsprünge, so daß ein Aufeinandertreffen von Vorsprüngen beim Zusammenpressen vermieden wird und der Sauger trotz der Verdickungen an einander gegenüberliegenden Seiten quer zu diesen stark zusammenpreßbar ist.

Durch die Bereiche geringerer Wandstärke hat der Sauger eine Vorzugsstellung dann, wenn die Bereiche geringerer Wandstärke in einer transversalen Ebene im Mund angeordnet sind. Dann übt der Saugernippel den geringsten Druck auf den Kiefer des Kindes aus. Es ist anzunehmen, daß das Kind die Tendenz hat bzw. befördert, den Sauger in diese Drehstellung zu drehen.

Gemäß einer Ausgestaltung weist der Sauger weitere Gestaltungsmerkmale auf, durch die eine bevorzugte Drehstellung im Mund vorgegeben ist. Hierfür weist beispielsweise der Saugernippel eines Trinksaugers oder Beruhigungssaugers einen flachen, bevorzugt transversal im Mund angeordneten Querchnitt und/oder einen verbreiterten Nippelkopf mit einer zur Nippelachse geneigten Abflachung für Anlage an der Zunge auf, wie z.B. in der DE 94 15 655 U1 beschrieben (sog. "NUK-Form"). Ferner kann hierfür der Mundschild eines Beruhigungssaugers eine (z.B. ovale oder schmetterlingsförmige) Kontur mit einem Freiraum für die Nasenpartie aufweisen. Auch kann hierfür die Innenseite des Mundschildes so gewölbt sein, daß der Mundschild eine bevorzugte Ausrichtung zu den Lippen des Kindes hat. Bei einem Sauger mit weiteren Gestaltungsmerkmalen zur bevorzugten Ausrichtung im Munde des Kindes sind gemäß einer Ausgestaltung die beiden einander gegenüberliegenden Längsseiten mit Bereichen geringerer Wandstärke so bezüglich der weiteren Gestaltungselemente angeordnet, daß sie sich beim Gebrauch in bevorzugter Ausrichtung transversal im Munde des Kindes befinden.

Der Saugernippel kann verschieden ausgestaltet sein. Beispielsweise kann er mindestens in einem Axialabschnitt im Querschnitt außen kreisrund sein. Der Saugernippel ist an mindestens einem Axialabschnitt im Querschnitt außen oval. Dieser spezielle Saugernippel mit einem flachen Querschnitt hat eine bevorzugte Ausrichtung, bei der die große Achse des den Querschnitt außen umschreibenden Ovals transversal im Munde des Kindes angeordnet ist. Der Saugernippel weist die beiden einander gegenüberliegenden Bereiche geringerer Wandstärke an den beiden Längsseiten auf der großen Achse des den Querschnitt außen umschreibenden Ovals auf.

Der Saugernippel kann zusätzlich zu den beiden Bereichen mit geringerer Wandstärke an zwei einander gegenüberliegenden Längsseiten mindestens einen weiteren längsseitigen Bereich mit geringerer Wandstärke aufweisen. Gemäß einer weiteren Ausgestaltung sind zwischen der großen Achse und der kleinen Achse des den Querschnitt des Saugernippels außen umschreibenden Ovals symmetrisch zur kleinen Achse und/oder zur großen Achse des Ovals weitere Bereiche geringerer Wandstärke angeordnet. Die weiteren Bereiche geringerer Wandstärke vermindern weiter den Druck auf die Kiefer beim Zusammendrücken des Saugernippels. Indem mehrere Bereiche verringerter Wandstärke auf beiden Seiten der kleinen Achse des Ovals vorgesehen werden, ist es möglich, bei weniger starker Reduzierung der Wandstärken an den Verdünnungen dieselbe Verminderung des Druckes auf den Kiefer zu erreichen, wie bei einem Saugernippel, der nur zwei Bereiche stärker verringerter Wandstärke aufweist. Hierdurch kann das Versagensrisiko des Saugernippels verringert werden.

Gemäß einer Ausgestaltung sind Bereiche größerer Wandstärke an den beiden einander gegenüberliegenden Längsseiten des Saugernippels angeordnet, die im Gebrauch in einer Frontalebene des Mundes angeordnet sind. Gemäß einer weiteren Ausgestaltung sind die Bereiche größerer Wandstärke an den beiden Längsseiten angeordnet, die von der kleinen Achse eines den Querschnitt des Saugernippels außen umschreibenden Ovals geschnitten werden. Bei dieser Anordnung setzen die Bereiche größerer Wandstärke dem Zusammendrücken des Saugernippels in der Frontalebene einen nur geringen Widerstand entgegen. Wenn der Saugernippel maximal zusammengedrückt ist, wirken die Bereiche größerer Wandstärke einem Durchtrennen des Saugernippels durch die Zähne des Kindes entgegen.

Gemäß einer weiteren Ausgestaltung sind die Bereiche geringerer Wandstärke und/oder die Bereiche größerer Wandstärke in Längsrichtung eines hohlen Nippelschaftes des Saugernippels und/oder eines hohlen Nippelkopfes des Saugernippels mindestens über einen Abschnitt des Nippelschaftes und/oder des Nippelkopfes erstreckt. Gemäß einer weiteren Ausgestaltung erstrecken sich die Bereiche geringerer Wandstärke und/oder die Bereiche größerer Wandstärke über im wesentlichen die gesamte Länge des Nippelschaftes. Gemäß einer weiteren Ausgestaltung erstrecken sich die Abschnitte geringerer Wandstärke und/oder die Abschnitte größerer Wandstärke im wesentlichen über die gesamte Länge des Nippelkopfes.

Für den Saugernippel kommen verschiedene weichelastische Materialien in Betracht. Gemäß einer Ausgestaltung ist er aus Latex oder Silikon oder Polyisopren (PI), anderen vernetzten Elastomeren oder thermoplastischen Elastomeren (TPE) hergestellt.

Für den Mundschild kommen insbesondere weichelastische und hartelastische Kunststoffe in Betracht. Gemäß einer Ausgestaltung besteht der Mundschild aus einem thermoplastischen Kunststoff oder aus einem vernetzten oder thermoplastischen Elastomeren. Gemäß einer Ausgestaltung besteht der Mundschild aus Polypropylen.

Die Erfindung wird nachfolgend anhand der anliegenden Zeichnungen von Ausführungsbeispielen näher erläutert. In den Zeichnungen zeigen:
- Fig. 1: einen Trinkflaschensauger mit Verdünnungen an den Längsseiten in Seitenansicht;
- Fig. 2: denselben Trinkflaschensauger in Vorderansicht;
- Fig. 3: denselben Saugernippel desselben Trinkflaschensaugers im Querschnitt;
- Fig. 4: einen Beruhigungssauger mit Verdünnungen an den Längsseiten in einer Seitenansicht;
- Fig. 5: denselben Beruhigungssauger in Vorderansicht;
- Fig. 6: den Saugernippel desselben Beruhigungssaugers im Querschnitt;
- Fig. 7: einen Beruhigungssauger mit mehreren längsseitig verlaufenden Verdünnungen in Seitenansicht;
- Fig. 8: denselben Beruhigungssauger in Vorderansicht;
- Fig. 9: einen Saugernippel desselben Beruhigungssaugers im Querschnitt;
- Fig. 10: Saugernippel desselben Beruhigungssaugers unbelastet in einem vergrößerten Querschnitt;
- Fig. 11: Saugernippel desselben Beruhigungssaugers belastet im Querschnitt;
- Fig. 12: Saugernippel eines herkömmlichen Beruhigungssaugers unbelastet im Querschnitt;
- Fig. 13: Saugernippel desselben Beruhigungssaugers belastet im Querschnitt;
- Fig. 14: einen Saugernippel eines Beruhigungssaugers mit mehreren längsseitig verlaufenden Verdünnungen in Nippelschaft und Nippelkopf in den Hauptansichten (Fig. 14a bis f) und in einer Perspektivansicht (Fig. 14g);
- Fig. 15: einen Nippelschaft eines anderen Saugernippels eines Beruhigungssaugers im Querschnitt.

Bei der nachfolgenden Erläuterung verschiedener Ausführungsbeispiele sind übereinstimmende oder im wesentlichen übereinstimmende Merkmale mit denselben Bezugsziffern bezeichnet, wobei abweichende Ausführungen mit hochgestellten Strichen bezeichnet sind.

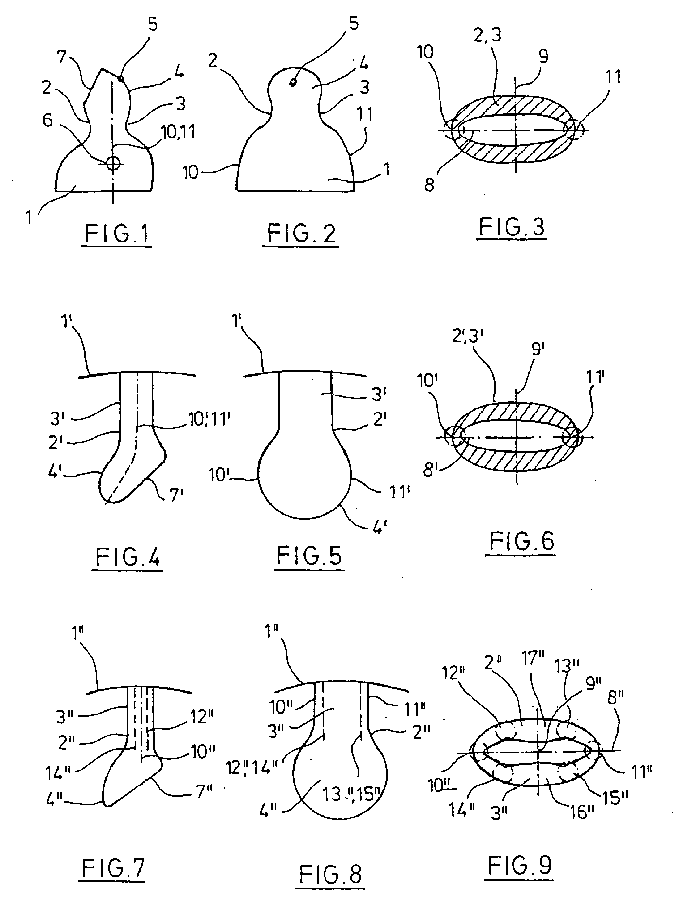

Gemäß Fig. 1 bis 3 weist ein Trinksauger einen Nippelträger 1 in Form einer im wesentlichen hohlzylindrischen Tülle 1' zum Stülpen über den Hals einer Flasche auf. Die Tülle 1' trägt einen kieferorthopädisch geformten, hohlen Saugernippel 2, der im Querschnitt außen oval und innen im wesentlichen oval ist. Der Saugernippel 2 weist einen Nippelschaft 3 und einen verbreiterten Nippelkopf 4 mit einem Trinkloch 5 auf. Die Tülle 1' hat ein Ventil 6 für den Druckausgleich.

Der Nippelkopf 4 hat annähernd die Form eines Ellipsoides und ist auf einer Seite mit einer Abflachung 7 versehen, die spitzwinklig zur in der Zeichnung vertikalen Mittelachse des Saugernippels 2 geneigt ist.

Das den Querschnitt des Saugernippels 2 außen umgebende Oval hat eine große Achse 8 und eine kleine Achse 9. Der Saugernippel 2 hat an den beiden Längsseiten, die von der großen Achse 8 des Ovals geschnitten werden, in Längsrichtung verlaufende Bereiche geringerer Wandstärke 10, 11, die sich über Nippelschaft 3 und Nippelkopf 4 erstrecken. Diese Bereiche geringerer Wandstärke 10, 11 setzen sich vom Nippelschaft 3 in derselben Ebene in der Tülle 1' fort. In diesen Bereichen 10, 11 ist der Saugernippel 2 im Querschnitt außen jeweils stetig gekrümmt und weist im Querschnitt innen jeweils eine Ecke auf.

Gemäß Fig. 4 bis 6 hat ein Beruhigungssauger einen Nippelträger 1 in Form eines Mundschildes 1". Von der Innenseite des Mundschildes 1 " steht ein Saugernippel 2' vor.

Auch der Saugernippel 2' ist im Querschnitt außen oval und innen im wesentlichen oval. Der Nippelkopf 4' ist ebenfalls mit einer Abflachung 7' versehen. Auch der Saugernippel 2' ist an den beiden einander gegenüberliegenden Längsseiten, die von der großen Achse 8' des den Querschnitt außen umgebenden Ovals geschnitten werden, mit in Längsrichtung verlaufenden Bereichen geringerer Wandstärke 10', 11' versehen. Die Bereiche geringerer Wandstärke 10', 11' erstrecken sich im Nippelschaft 3' parallel zur Mittelachse des Nippelschaftes 3' und sind im Nippelkopf 4' von der Mittelachse und der Abflachung 7' weg gekrümmt. In diesen Bereichen 10', 11' ist der Saugernippel 2' im Querschnitt außen jeweils stetig gekrümmt und weist im Querschnitt innen jeweils eine Ecke auf.

Der Trinksauger und der Beruhigungssauger werden aufgrund ihrer Formgebung jeweils so angeordnet, daß die lange Achse 8, 8' in der Transversalebene des Mundes angeordnet ist und die Abflachung 7, 7' an der Zunge des Kindes anliegt. Der Saugernippel 2, 2' setzt einem Zusammendrücken in Richtung der kurzen Achse 9, 9' einen geringeren Widerstand als ein Saugernippel entgegen, der überall konstante Wandstärke aufweist. Dies beruht auf den Bereichen geringerer Wandstärke 10, 11, 10', 11'. Infolgedessen wird das Risiko von Gebißfehlstellungen des Kindes weiter herabgesetzt.

Bei dem Beruhigungssauger von Fig. 7 bis 9 weist der Saugernippel 2" neben den Bereichen geringerer Wandstärke 10", 11" weitere Bereiche mit geringerer Wandstärke 12", 13", 14", 15" auf, die zwischen der großen Achse 8" und der kleinen Achse 9" des den Querschnitt außen umgebenden Ovals angeordnet sind, wobei diese weiteren Bereiche mit geringerer Wandstärke 12", 13", 14", 15" symmetrisch zu den beiden genannten Achsen 8", 9" angeordnet sind.

Ferner hat der Saugernippel 2" an den beiden einander gegenüberliegenden Längsseiten, die von der kleinen Achse 9' geschnitten werden, in Längsrichtung verlaufende Bereiche größerer Wandstärke 16", 17" (auch "Verdickungen" genannt). In diesen Bereichen 16", 17" ist der Außenumfang jeweils stetig gekrümmt und hat der Innenumfang einen Vorsprung. Beim Zusammendrücken des Saugernippels in Richtung der kleinen Achse 9" liegen die Verdickungen schließlich aneinander an und verhindern eine übermäßige Deformation.

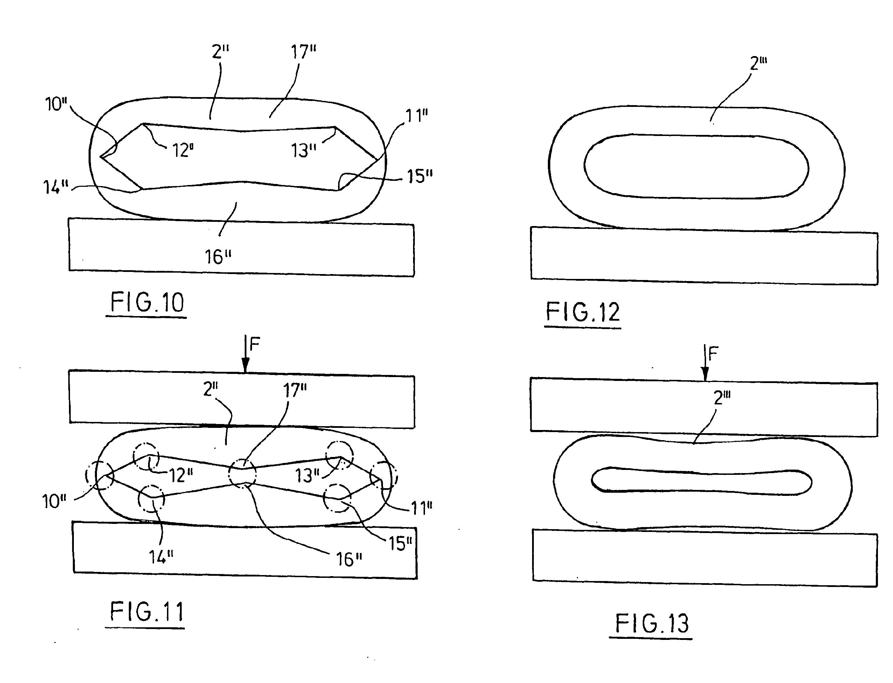

In den Fig. 10 und 11 sind die Spannungen im unverformten und im verformten Querschnitt des Saugernippels 2" dargestellt, wobei die Spannung umso größer ist, je heller der Querschnitt gefärbt ist. Gemäß Fig. 10 ist der unbelastete Saugernippel 2" überall frei von Spannungen. Gemäß Fig. 11 nehmen bei dem durch die Kraft F belasteten Saugernippel 2" die Spannungen in Richtung der Bereiche geringerer Wandstärke 10", 11 ", 12", 13", 14", 15" zu, wobei jedoch die Spannungen insgesamt moderat sind.

Dies wird deutlich im Vergleich zu einem herkömmlichen Saugernippel 2"' mit konstanter Wandstärke, der unbelastet in Fig. 12 und durch die Kraft F belastet in Fig. 13 gezeigt ist. Gemäß Fig. 13 erstrecken sich die belasteten Bereiche über die gesamten Längsseiten des Saugernippels 2'" hinweg.

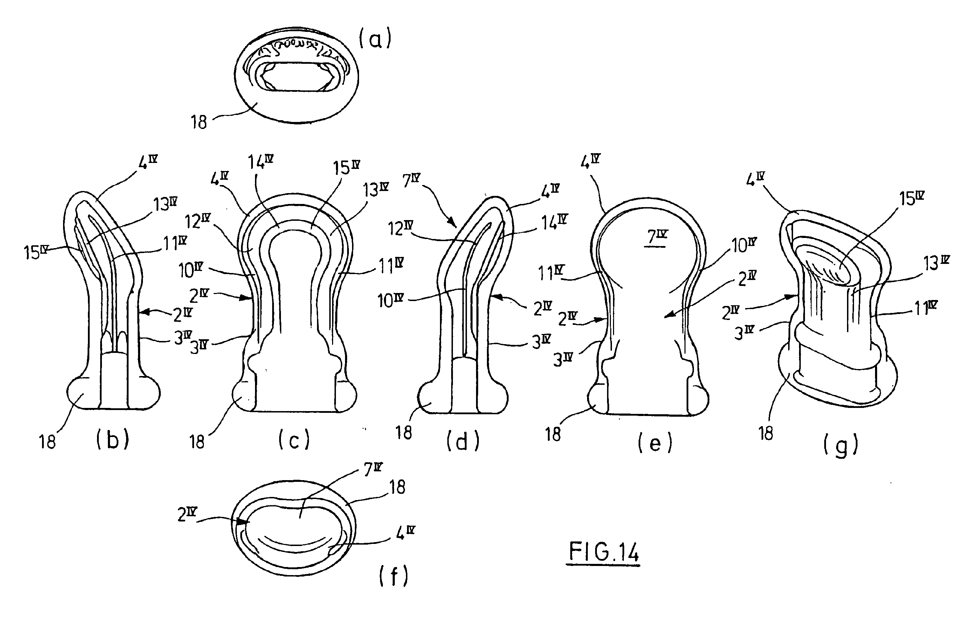

Die Fig. 14 zeigt einen Saugernippel 2^{IV} der sich vom Saugernippel 2" gemäß Fig. 7 bis 9 insbesondere dadurch unterscheidet, daß die Bereiche geringerer Wandstärke 10^{IV} 11^{IV} etwa auf der Mittelebene des Nippelschaftes 3^{IV} angeordnet sind, und sich bis weit in den Nippelkopf 4^{IV} hineinerstrecken, wo sie von der Mittelebene des Nippelschaftes 3^{IV} weggekrümmt sind, so daß sie in der Nähe des äußeren Endes einer Abflachung bzw. Einwölbung 7^{IV} an der Unterseite des Nippelkopfes 4^{IV} auslaufen.

Die Bereiche geringerer Wandstärke 12^{IV}, 13^{IV} beginnen in weiterer Entfernung von dem Befestigungsende des Nippelschaftes 3^{IV} als die Bereiche 10^{IV}, 11^{IV} und laufen ebenfalls zunächst parallel zur Mittelebene des Nippelschaftes 3^{IV}. Im Nippelkopf 4^{IV} sind sie von der Mittelebene weg gekrümmt und im oberen Endbereich des Nippelkopfes miteinander verbunden.

Die Bereiche geringerer Wandstärke 14^{IV}, 15^{IV} verlaufen in noch weiterem Abstand von der Mittelebene des Nippelschaftes 3^{IV} annähernd parallel zu den Bereichen geringerer Wandstärke 12^{IV}, 13^{IV}.

In den Bereichen 10^{IV} bis 15^{IV} ist der Saugernippel im Querschnitt außen jeweils stetig gekrümmt und weist im Querschnitt innen jeweils eine Ecke oder eine stärkere Krümmung als außen auf.

Das Befestigungsende des Nippelschaftes 3^{IV} ist mit einem Saugerflansch 18 versehen, der an einer vom Benutzer abgewandten Seite eines - nicht dargestellten - Mundschildes mittels ebenfalls nicht gezeigter Einrichtungen fixierbar ist.

Durch die Bereiche geringeren Querschnittes wurde der Saugernippel 2^{IV} im Bereich des Nippelschaftes 3^{IV} und des Nippelkopfes 4^{IV} konstruktiv besonders elastisch gestaltet, um eine größtmögliche Weichheit zu erreichen.

Infolgedessen setzt der Nippelschaft 3^{IV} einer vertikalen Belastung bzw. einem Zusammendrücken in der Frontalebene beim Schließen des Mundes einen nur geringen Widerstand entgegen. Die seitlichen Verdünnungen 10^{IV} bis 15^{IV} ermöglichen ein leichtes Einknicken der Schaftgeometrie. Bei Erhöhung der Belastung wird der Querschnitt weiter gestaucht, bis der Nippelschaft 3^{IV} der Anlage der einander gegenüberliegenden Seiten aneinander die geringste Höhe annimmt.

Um auch im Bereich des Nippelkopfes 4^{IV} die größtmögliche Weichheit zu erreichen, sind die Bereiche geringerer Wandstärke 10^{IV} bis 15^{IV} bis in den Bereich des Nippelkopfes 4^{IV} weitergeführt, infolgedessen ist der Widerstand des Nippelkopfes 4^{IV} beim Saugen des Kindes verringert. Das Verformen des Nippelkopfes 4^{IV} wird durch ein kontrolliertes Einknicken in den Bereichen mit geringerer Wandstärke 10^{IV} bis 15^{IV} erleichtert.

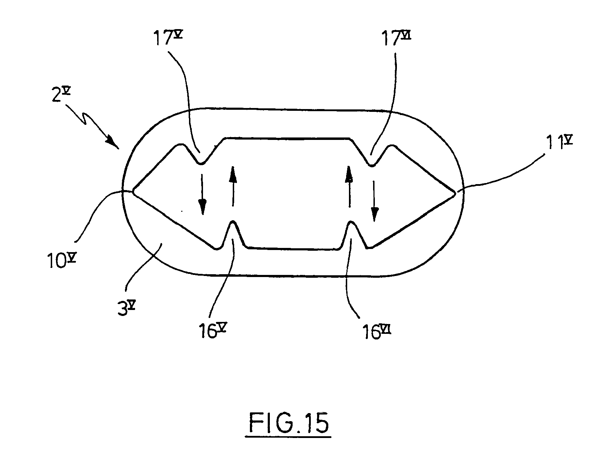

Es ist auch möglich, den Saugernippel eines Trinksaugers entsprechend dem Saugernippel 2^{IV} von Fig. 14 und 15 auszuführen. Die Erfindung bezieht solche Ausgestaltungen von Trinksaugern ein.

Der Saugernippel 2^{V} gemäß Fig. 15 unterscheidet sich von dem Saugernippel 2" von Fig. 7 bis 9 im wesentlichen dadurch, daß er an den beiden im wesentlichen flachen Längsseiten des Saugerschaftes 3^{V} im Querschnitt innen jeweils zwei Vorsprünge 16^{V}, 16^{VI}, 17^{V}, 17^{VI} aufweist. Die Vorsprünge 16^{V} und 17^{V} sind zueinander seitlich versetzt angeordnet und ebenso sind die Vorsprünge 16^{VI}, 17^{VI} zueinander seitlich versetzt angeordnet. Infolgedessen treffen sie beim Zusammendrücken des Nippelschaftes 3^{V} in der Frontalebene beim Schließen des Mundes nicht aufeinander, so daß übermäßige Verdickungen des Beruhigungssaugers vermieden werden.

Die Verdünnungen können bei Herstellung des Saugers im Tauchverfahren (aus Dispersionen, z.B. Latices oder verflüssigten Polymeren, z.B. Lösungen oder Schmelzen) durch Tauchformen mit eingearbeiteten Kanten erreicht werden, die mehr oder weniger scharf sind bzw. einen kleinen Krümmungsradius aufweisen. Das sich an den mehr oder weniger scharfen Kanten der Tauchformen ein dünnerer Film ausbildet, ist ein Effekt der Oberflächenspannung des getauchten Materials. Die Minimierung der freien Oberflächenenergie wird dabei durch das Fließen des Latexfilmes weg von konvexen Flächen hin zu weniger gekrümmten, ebenen oder konkaven Flächen erreicht, so daß der Film im Querschnitt einen gleichmäßigen Bogen über die mehr oder weniger scharfen Kanten der Form bildet. Außer durch Abkanten der sonst im Durchmesser gerundeten Tauchformen ist ein entsprechender Effekt auch durch Herausarbeiten einer aus der Tauchform herausstehenden Kante zu erreichen und gegebenenfalls zu verstärken. Umgekehrt kann nach dem gleichen Prinzip durch das Einarbeiten von konkaven Bereichen in die Tauchform das Saugermaterial gezielt verdickt werden. Das Prinzip ist dasselbe wie zuvor beschrieben: Der Film fiillt die konkaven Bereiche der Form und bildet außen einen gleichmäßigen Bogen. Somit können in einer kombinierten Herstellungsvariante dünnere und verstärkte Bereiche im Sauger erzielt werden.

Zusätzlich wird der beschriebene Effekt beim thermosensiblen Tauchen noch dadurch verstärkt, daß das Formwärmepotential an den konvexen Stellen naturgemäß früher erschöpft ist, als an geraden oder konkaven Flächen, wo die Koagulation folglich über einen längeren Zeitraum stattfinden kann. Auch beim Verfahren der Salzkoagulation ist die verfügbare Salzkonzentration pro Volumen zu koagulierender Mischung an konvexen Stellen deutlich geringer als an ebenen oder konkaven. Somit sind die genannten Tauchverfahren gleichermaßen geeignet, entsprechende Saugergeometrien zu erzeugen.

Falls die Formgebung im Spritzguß oder Kompression-Moulding erfolgt, sind die Verdünnungen und Verdickungen in der üblichen Weise für die gängigen Materialien Festkautschuk, thermoplastische Elastomere und Fest- oder Flüssigsilikonkautschuk umsetzbar. Dies erfolgt z.B. durch entsprechende Ausarbeitungen in der Form, insbesondere am Kern, wenn die Außenkontur nicht verändert werden soll. Dementsprechend ist z.B. der Kern in Bereichen, an denen eine geringere Wandstärke des Saugers ausgebildet werden soll, mit mehr oder weniger scharf herausstehenden Kanten versehen. Dort, wo Bereiche des Saugers größerer Wandstärke gebildet werden sollen, weist der Kern konkave Bereiche auf. Um den Kern herum ist ein Werkzeug mit einer der Außenkontur des Saugers entsprechenden Innenkontur angeordnet. Das Werkzeug hat z.B. eine glatte Innenkontur. Es umfaßt Außenbacken zwischen denen eine Trennebene vorhanden ist. Durch Auseinanderbewegen der Außenbacken senkrecht zur Trennebene kann das Werkzeug nach dem Spritzen des Saugers geöffnet werden, der dann vom Kern abgenommen werden kann.

## Patentansprüche

1. Sauger mit einem Nippelträger (1) und einem von dem Nippelträger (1) vorstehenden, hohlen Saugernippel (2), der mindestens in einem Axialabschnitt im Querschnitt außen oval ist und bei dem der Saugernippel zwei einander gegenüberliegende Bereiche geringerer Wandstärke (10, 11) an den beiden Längsseiten auf der großen Achse (8) des den Querschnitt des Saugernippels (2) außen umschreibenden Ovals und im Querschnitt außen einen Krümmungsradius aufweist, **dadurch gekennzeichnet, dass** der Saugernippel (2) in den im Querschnitt konvexen Bereichen mit geringerer Wandstärke (10, 11) im Querschnitt innen eine Ecke aufweist.

2. Sauger nach Anspruch 1, bei dem der Nippelträger (1) eine Tülle (1') oder ein Mundschild (1") ist.

3. Sauger nach Anspruch 1 oder 2, bei dem der Saugernippel (2) in den Bereichen mit geringerer Wandstärke (10, 11) im Querschnitt innen und im Querschnitt außen parallel verlaufende Konturen aufweist und daneben Bereiche mit größerer oder sich mit zunehmendem Abstand von den Bereichen mit geringerer Wandstärke (10,11) vergrößernder Wandstärke aufweist.

4. Sauger nach einem der Ansprüche 1 bis 3, bei dem der Saugernippel (2") in Bereichen mit größerer Wandstärke (16", 17") im Querschnitt außen mindestens einen Vorsprung aufweist.

5. Sauger nach einem der Ansprüche 1 bis 4, bei dem der Saugernippel (2") in Bereichen mit größerer Wandstärke (16", 17") im Querschnitt innen mindestens einen Vorsprung aufweist.

6. Sauger nach einem der Ansprüche 1 bis 5, bei dem der Saugernippel an einander gegenüberliegenden Seiten im Querschnitt innen zueinander versetzte Vorsprünge aufweist.

7. Sauger nach einem der Ansprüche 1 bis 6, bei dem der Saugernippel (2) und/oder die Tülle (1') und/oder der Mundschild (1") weitere Gestaltungsmerkmale aufweist, durch die eine bevorzugte Drehstellung im Mund vorgegeben ist.

8. Sauger nach Anspruch 7, bei dem die beiden einander gegenüberliegenden Längsseiten mit Bereichen geringerer Wandstärke (10, 11) so bezüglich der weiteren Gestaltungsmerkmale angeordnet sind, daß sie sich beim Gebrauch in bevorzugter Ausrichtung Teil einer transversalen Ebene im Munde des Kindes sind.

9. Sauger nach einem der Ansprüche 1 bis 8, bei dem zwischen der großen Achse (8) und der kleinen Achse (9) des den Querschnitt des Saugernippels (2) außen umschreibenden Ovals symmetrisch zur kleinen Achse (9) und/oder zur großen Achse (8) des Ovals weitere Bereiche geringerer Wandstärke (12", 13", 14", 15") angeordnet sind.

10. Sauger nach einem der Ansprüche 1 bis 9, bei dem die Bereiche größerer Wandstärke (16", 17") an den beiden Längsseiten angeordnet sind, die von der kleinen Achse (9") des den Querschnitt des Saugernippels (2") außen umschreibenden Ovals geschnitten werden.

11. Sauger nach einem der Ansprüche 1 bis 10, bei dem die Bereiche geringerer Wandstärke (10, 11) und/oder die Bereiche größerer Wandstärke (16", 17") in Längsrichtung eines hohlen Nippelschaftes (3) des Sauernippels (2) und/oder eines hohlen Nippelkopfes (4) des Saugernippels (2) mindestens über einen Abschnitt des Nippelschaftes (3) und/oder des Nippelkopfes (4) erstreckt sind.

12. Sauger nach Anspruch 11, bei dem sich die Bereiche geringerer Wandstärke (10, 11) und/oder die Bereiche größerer Wandstärke (16", 17") über im wesentlichen die gesamte Länge des Nippelschaftes (3) erstrecken.

13. Sauger nach Anspruch 11 oder 12, bei dem sich die Abschnitte geringerer Wandstärke (10, 11) und/oder die Abschnitte größerer Wandstärke (16", 17") im wesentlichen über die gesamte Länge des hohlen Nippelkopfes erstrecken.

14. Sauger nach einem der Ansprüche 1 bis 13, bei dem der Saugernippel (2) und/oder die Tülle (1') aus Latex oder Silikon oder Polyisopren oder aus einem vernetzten oder thermoplastischen Elastomeren hergestellt ist.

15. Sauger nach einem der Ansprüche 1 bis 14, bei dem das Mundschild (1") aus einem thermoplastischen Kunststoff oder aus einem vernetzten oder thermoplastischen Elastomeren hergestellt ist.

## Claims

1. A dummy teat including a nipple carrier (1) and a hollow dummy nipple (2) projecting from the nipple carrier (1), which is oval at least in one axial portion in the cross-section outside and wherein the dummy nipple has two opposed areas of a smaller wall thickness (10, 11) on the two longitudinal sides on the large axis (8) of the oval externally circumscribing the cross-section of the dummy nipple (2) and has a radius of curvature in the cross-section outside, **characterized in that** the dummy nipple (2) has a corner in the cross-section inside in the areas being convex in the cross-section and with smaller wall thickness (10, 11).

2. The dummy teat according to claim 1, wherein the nipple carrier (1) is a mouthpiece (1') or mouth shield (1").

3. The dummy teat according to any claim 1 or 2, wherein the dummy nipple (2), in the areas of a smaller wall thickness (10, 11), has contours stretching in parallel in the cross-section inside and the cross-section outside and, furthermore, has areas of a wall thickness which is larger or becomes larger with an increasing distance from the areas smaller in wall thickness (10, 11).

4. The dummy teat according to any one of claims 1 to 3, wherein the dummy nipple (2"), in areas of a larger wall thickness (16", 17"), has at least one projection the cross-section outside.

5. The dummy teat according to any one of claims 1 to 4, wherein the dummy nipple (2") has at least one projection in the cross-section inside, in areas of a larger wall thickness (16", 17").

6. The dummy teat according to any one of claims 1 to 5, wherein the dummy nipple has projections offset from each other in the cross-section inside, on sides opposite each other.

7. The dummy teat according to any one of claims 1 to 6, wherein the dummy nipple (2) and/or the mouthpiece (1') and/or the mouth shield (1") have further configuration features by which a preferred rotational position is predetermined in the mouth.

8. The dummy teat according to claim 7, wherein the opposed longitudinal sides having areas of a smaller wall thickness (10, 11) are arranged with regard to the further configuration features such they are part of a transversal plane in a preferred orientation inside the baby's mouth when in use.

9. The dummy teat according to any one of claims 1 to 8, wherein more areas of a smaller wall thickness (12", 13", 14", 15") are disposed symmetrically to the small axis (9) and/or large axis (8) of the oval between the large axis (8) and the small axis (9) of the oval externally circumscribing the cross-section of the dummy nipple (2).

10. The dummy teat according to any one of claims 1 to 9, wherein the areas of a larger wall thickness (16", 17") are disposed on the two longitudinal sides, which are intersected by the small axis (9") of the oval externally circumscribing the cross-section of the dummy nipple (2").

11. The dummy teat according to any one of claims 1 to 10, wherein the areas of a smaller wall thickness (10, 11) and/or the areas of a larger wall thickness (16", 17") are extended in a longitudinal direction of a hollow nipple shank (3) of the dummy nipple (2) and/or a hollow nipple head (4) of the dummy nipple (2) at least across one portion of the nipple shank (3) and/or nipple head (4).

12. The dummy teat according to claim 11, wherein the areas of a smaller wall thickness (10, 11) and/or the areas of a larger wall thickness (16", 17") extend substantially over the full length of the nipple shank (3).

13. The dummy teat according to claim 11 or 12, wherein the portions of a smaller wall thickness (10, 11) and/or the portions of a larger wall thickness (16", 17") extend substantially over the full length of the hollow nipple head.

14. The dummy teat according to any one of claims 1 to 13, wherein the dummy nipple (2) and/or the mouthpiece (1') are manufactured from latex or silicone or polyisoprene or cross-linked or thermoplastic elastomers.

15. The dummy teat according to any one of claims 1 to 14, wherein the mouth shield (1") is manufactured from a thermoplastic material or cross-linked or thermoplastic elastomers.

## Revendications

1. Tétine avec une base de tétine (1) et avec une tétine d'aspiration (2) creuse surmontant la base de tétine (1) et étant ovale dans sa section transversale à l'extérieur dans au moins une partie axiale, et dans laquelle la tétine d'aspiration a deux zones d'épaisseur de paroi réduite (10, 11) opposées dans les deux côtés longitudinaux sur le grand axe (8) de l'ovale qui délimite la section transversale de la tétine d'aspiration (2) à l'extérieur, et qui a un rayon de courbure dans sa section transversale à l'extérieur, **caractérisé en ce que** à son l'intérieur, la tétine d'aspiration (2) présente un coin dans la section transversale dans les zones de section transversale convexes avec épaisseur de paroi réduite (10, 11).

2. Tétine selon la revendication 1, dans laquelle la base de tétine (1) est une douille (1') ou une plaque buccale (1").

3. Tétine selon la revendication 1 ou 2, dans laquelle la tétine d'aspiration (2) présente des contours s'étendant en parallèle dans la section transversale à l'intérieur et dans la section transversale à l'extérieur dans les zones d'épaisseur de paroi réduite (10, 11), et présente en outre des zones d'épaisseur de paroi plus grande ou grandissante avec distance croissante aux zones d'épaisseur de paroi réduite (10, 11).

4. Tétine selon l'une quelconque des revendications 1 à 3, dans laquelle la tétine d'aspiration (2") présente au moins une saillie dans la section transversale à l'extérieur dans des zones d'épaisseur de paroi plus grande (16", 17").

5. Tétine selon l'une quelconque des revendications 1 à 4, dans laquelle la tétine d'aspiration (2") présente au moins une saillie dans la section transversale à l'intérieur dans des zones d'épaisseur de paroi plus grande (16", 17").

6. Tétine selon l'une quelconque des revendications 1 à 5, dans laquelle la tétine d'aspiration présente des saillies décalées l'une de l'autre sur des faces opposées dans la section transversale à l'intérieur.

7. Tétine selon l'une quelconque des revendications 1 à 6, dans laquelle la tétine d'aspiration (2) et/ou la douille (1') et/ou la plaque buccale (1") présente(nt) des autres caractéristiques de forme par lesquels une position rotative préférée est déterminée dans la bouche.

8. Tétine selon la revendication 7, dans laquelle les deux côtés longitudinaux opposés avec des zones d'épaisseur de paroi réduite (10, 11) sont arrangés par rapport aux autres caractéristiques de forme de telle façon qu'ils font partie d'un plan transversal dans la bouche de l'enfant quand la tétine est utilisée dans son orientation préférée.

9. Tétine selon l'une quelconque des revendications 1 à 8, dans laquelle d'autres zones d'épaisseur de paroi réduite (12", 13", 14", 15") sont arrangées entre le grand axe (8) et le petit axe (9) de l'ovale qui délimite la section transversale de la tétine d'aspiration (2) à l'extérieur, de façon symétrique au petit axe (9) et/ou au grand axe (8) de l'ovale.

10. Tétine selon l'une quelconque des revendications 1 à 9, dans laquelle les zones d'épaisseur de paroi plus grande (16", 17") sont arrangées sur les deux côtés latéraux qui sont coupés par le petit axe (9") de l'ovale qui délimite la section transversale de la tétine d'aspiration (2") à l'extérieur.

11. Tétine selon l'une quelconque des revendications 1 à 10, dans laquelle les zones d'épaisseur de paroi réduite (10, 11) et/ou les zones d'épaisseur de paroi plus grande (16", 17") s'étendent dans la direction longitudinale d'un arbre de tétine creux (3) de la tétine d'aspiration (2) et/ou d'une tête de tétine creuse (4) de la tétine d'aspiration (2) au moins à travers une partie de l'arbre de tétine (3) et/ou de la tête de tétine (4).

12. Tétine selon la revendication 11, dans laquelle les zones d'épaisseur de paroi réduite (10, 11) et/ou les zones d'épaisseur de paroi plus grande (16", 17") s'étendent essentiellement à travers la longueur entière de l'arbre de tétine (3).

13. Tétine selon la revendication 11 ou 12, dans laquelle les zones d'épaisseur de paroi réduite (10, 11) et/ou les zones d'épaisseur de paroi plus grande (16", 17") s'étendent essentiellement à travers la longueur entière de la tête de tétine creuse.

14. Tétine selon l'une quelconque des revendications 1 à 13, dans laquelle la tétine d'aspiration (2) et/ou la douille (1') est faite de latex ou silicone ou polyisoprène ou d'un élastomère réticulé ou thermoplastique.

15. Tétine selon l'une quelconque des revendications 1 à 14, dans laquelle la plaque buccale (1") est faite d'une matière plastique thermoplastique ou d'un élastomère réticulé ou thermoplastique.
